# EUROPÄISCHE PATENTANMELDUNG

(11) **EP 3 498 420 A1**
(43) Veröffentlichungstag der Anmeldung: **19.06.2019**
(21) Anmeldenummer: 18211332.4
(22) Anmeldetag: 10.12.2018
(51) Int. Cl.: B23Q 1/62, H02K 41/03, B23Q 1/01, B23Q 39/02

(54) **POSITIONIERUNGSSYSTEM UND MATERIALBEARBEITUNGSMASCHINE**

(30) Priorität: 13.12.2017 DE 102017129748
(71) Anmelder: eurolaser GmbH, 21339 Lüneburg (DE)
(72) Erfinder: Kluczinski, Matthias, 21339 Lüneburg (DE)
(74) Vertreter: Noack, Andreas

(57) **Zusammenfassung**

Es wird ein Positionierungssystem zum Positionieren von wenigstens zwei Funktionseinheiten (111,121,211,221,311,312,321) entlang zweier Achsen vorgestellt, aufweisend: ein Führungsschienensystem mit einer ersten Führungsschiene (101,201,301) und mit einer parallel zur ersten Führungsschiene (101,201,301) und in einem Abstand zu dieser angeordneten zweiten Führungsschiene (102,202,302), einen ersten Schlitten (110,210,310), welcher in Längsrichtung der Führungsschienen (101,102,201,202,301,302) verfahrbar auf der ersten Führungsschiene (101,201,301) und auf der zweiten Führungsschiene (102,202,302) gelagert ist, und einen zweiten Schlitten (120,220,320), welcher in Längsrichtung der Führungsschienen (101,102,201,202,301,302) verfahrbar auf der ersten Führungsschiene (101,201,301) und auf der zweiten Führungsschiene (102,202,302) gelagert ist, wobei eine erste Funktionseinheit (111,211,311) an dem ersten Schlitten (110,210,310) quer zur Längsrichtung der Führungsschienen (101,102,201,202,301,302) verfahrbar angeordnet ist, und wobei eine zweite Funktionseinheit (121,221,321) an dem zweiten Schlitten (120,220,320) quer zur Längsrichtung der Führungsschienen (101,102,201,202,301,302) verfahrbar angeordnet ist.

Das Positionierungssystem zeichnet sich dadurch aus, dass der ersten Führungsschiene (101) ein erster passiver Stator (130) zugeordnet ist, der zweiten Führungsschiene (102) ein zweiter passiver Stator (131) zugeordnet ist, der erste Schlitten (110,210,310) einen ersten aktiven Läufer (140), welcher mit dem ersten passiven Stator (130) als Linearmotor zusammenwirkt, und einen zweiten aktiven Läufer (141), welcher mit dem zweiten passiven Stator (131) als Linearmotor zusammenwirkt, aufweist, und dass der zweite Schlitten (120,220,320) einen dritten aktiven Läufer (146), welcher mit dem ersten passiven Stator (130) als Linearmotor zusammenwirkt, und einen vierten aktiven Läufer (147), welcher mit dem zweiten passiven Stator (131) als Linearmotor zusammenwirkt, aufweist.

Weiterhin wird eine Materialbearbeitungsmaschine mit einem entsprechenden Positionierungssystem vorgestellt.

## Beschreibung

Die Erfindung betrifft ein Positionierungssystem zum Positionieren von wenigstens zwei Funktionseinheiten entlang zweier Achsen, aufweisend ein Führungsschienensystem mit einer ersten Führungsschiene und mit einer parallel zur ersten Führungsschiene und in einem Abstand zu dieser angeordneten zweiten Führungsschiene, einen ersten Schlitten, welcher in Längsrichtung der Führungsschienen verfahrbar auf der ersten Führungsschiene und auf der zweiten Führungsschiene gelagert ist, und einen zweiten Schlitten, welcher in Längsrichtung der Führungsschienen verfahrbar auf der ersten Führungsschiene und auf der zweiten Führungsschiene gelagert ist, wobei eine erste Funktionseinheit an dem ersten Schlitten quer zur Längsrichtung der Führungsschienen verfahrbar angeordnet ist, und wobei eine zweite Funktionseinheit an dem zweiten Schlitten quer zur Längsrichtung der Führungsschienen verfahrbar angeordnet ist.

Positioniersysteme mit einem auf zwei Führungsschienen verfahrbaren Schlitten und einer entlang des Schlittens verfahrbaren Funktionseinheit sind seit langem bekannt und werden in vielen Bereichen der Technik eingesetzt. Insbesondere in Bearbeitungsmaschinen für bahn- oder plattenförmiges Material kann mit entsprechenden Positioniersystemen ein Werkzeug schnell und genau in einem großen Arbeitsbereich parallel zum zu bearbeitenden Material verfahren werden. Dabei können kartesische Positionsdaten direkt an eine Steuerung des Positioniersystems übergeben und in Bewegungsdaten für den Schlitten und für die Funktionseinheit umgesetzt werden.

Um die Bearbeitungsleistung von entsprechenden Bearbeitungsmaschinen zu erhöhen, kann eine zweite Funktionseinheit vorgesehen sein, welche beispielsweise ein zweites Werkzeug umfasst. Um die zweite Funktionseinheit unabhängig von der ersten Funktionseinheit bewegen zu können, kann diese auf einem zweiten Schlitten angeordnet sein.

Eine Bearbeitungsmaschine mit einem entsprechenden Positioniersystem wird beispielsweise unter der Typbezeichnung "D3" von der Firma Zünd Systemtechnik AG angeboten.

Nachteilig bei entsprechenden Positioniersystemen ist der hohe Aufwand für den Antrieb der Schlitten. Während beide Schlitten ohne weiteres auf gemeinsamen Führungsschienen gelagert werden können, erfolgt der Antrieb der Schlitten in der Regel über komplett unabhängige Antriebssysteme, die für jeden Schlitten einen eigenen Antriebsmotor und einen über die gesamte Länge des Verfahrwegs geführten Antriebsriemen aufweisen.

Durch den für das doppelt ausgeführte Antriebssystem beanspruchten Bauraum wird ein entsprechendes Positionierungssystem bei gleicher verfügbarer Arbeitsfläche größer, wenn die Antriebssysteme außerhalb der Arbeitsfläche angeordnet sind. Sind die Antriebssysteme hingegen innerhalb der Arbeitsfläche, beispielsweise zwischen den Führungsschienen und unter der Arbeitsfläche, angeordnet, so steht weniger Bauraum für zusätzliche Komponenten wie Materialfördersysteme oder Absaugungen zur Verfügung. Beides ist nachteilig.

Es besteht daher die Aufgabe der Erfindung darin, ein Positionierungssystem sowie eine Bearbeitungsmaschine bereitzustellen, welche hinsichtlich der beschriebenen Problematik verbessert sind.

Diese Aufgabe wird gemäß eines Aspekts der Erfindung gelöst durch ein Positionierungssystem zum Positionieren von wenigstens zwei Funktionseinheiten entlang zweier Achsen, aufweisend: ein Führungsschienensystem mit einer ersten Führungsschiene und mit einer parallel zur ersten Führungsschiene und in einem Abstand zu dieser angeordneten zweiten Führungsschiene, einen ersten Schlitten, welcher in Längsrichtung der Führungsschienen verfahrbar auf der ersten Führungsschiene und auf der zweiten Führungsschiene gelagert ist, und einen zweiten Schlitten, welcher in Längsrichtung der Führungsschienen verfahrbar auf der ersten Führungsschiene und auf der zweiten Führungsschiene gelagert ist, wobei eine erste Funktionseinheit an dem ersten Schlitten quer zur Längsrichtung der Führungsschienen verfahrbar angeordnet ist, und wobei eine zweite Funktionseinheit an dem zweiten Schlitten quer zur Längsrichtung der Führungsschienen verfahrbar angeordnet ist, welche dadurch weitergebildet ist, dass der ersten Führungsschiene ein erster passiver Stator zugeordnet ist, der zweiten Führungsschiene ein zweiter passiver Stator (131) zugeordnet ist, der erste Schlitten einen ersten aktiven Läufer, welcher mit dem ersten passiven Stator als Linearmotor zusammenwirkt, und einen zweiten aktiven Läufer, welcher mit dem zweiten passiven Stator als Linearmotor zusammenwirkt, aufweist, und dass der zweite Schlitten einen dritten aktiven Läufer, welcher mit dem ersten passiven Stator als Linearmotor zusammenwirkt, und einen vierten aktiven Läufer, welcher mit dem zweiten passiven Stator als Linearmotor zusammenwirkt, aufweist.

Jeder der Schlitten wird gemäß der Erfindung durch zwei Linearmotoren angetrieben, wobei die aktiven Läufer der Linearmotoren jeweils den Schlitten zugeordnet sind, und wobei die passiven Statoren der Linearmotoren jeweils den Führungsschienen zugeordnet sind. Dabei nutzen jeweils zwei Linearmotoren den selben passiven Stator, so dass insgesamt der Aufwand für den Aufbau des Positionierungssystems reduziert ist.

In einer besonders vorteilhaften Ausführung eines Positionierungssystems gemäß der Erfindung können sich die aktiven Läufer des ersten Schlittens und die aktiven Läufer des zweiten Schlittens in ihrer elektrischen und/oder mechanischen Dimensionierung voneinander unterscheiden.

Oftmals werden mit einem erfindungsgemäßen Positionierungssystem unterschiedliche Funktionseinheiten positioniert, die Funktionseinheiten können sich dabei insbesondere in ihrem Gewicht und/oder in ihrem Bewegungsmuster unterschieden. Eine unterschiedliche mechanische und/oder elektrische Dimensionierung der aktiven Läufer ermöglicht es, für jeden der beiden Schlitten Linearmotoren bereitzustellen, welche für die an dem jeweiligen Schlitten angeordnete Funktionseinheit optimiert sind. Gleichzeitig kann die gemeinsame Verwendung der passiven Statoren in jeweils zwei unterschiedlich dimensionierten Linearmotoren beibehalten werden.

In einer möglichen Ausführung der Erfindung können sich die aktiven Läufer des ersten Schlittens und die aktiven Läufer des zweiten Schlittens in einer Anzahl und/oder in einem Abstand magnetischer Pole unterscheiden. Eine Variation der Anzahl und/oder des Abstands der magnetischen Pole der aktiven Läufer ermöglicht beispielsweise unterschiedliche Schrittweiten, wenn die entsprechenden Linearmotoren als Schrittmotoren betrieben werden.

In einer weiteren möglichen Ausführung der Erfindung können die aktiven Läufer des ersten Schlittens und die aktiven Läufer des zweiten Schlittens sich in einer Wicklungszahl und/oder einem Leitungsquerschnitt von Magnetspulen unterscheiden. Durch eine entsprechende Variation der Wicklungszahlen und/oder der Leitungsquerschnitte lassen sich die durch die Magnetspulen erzeugten Magnetfeldstärken verändern.

Alternativ oder zusätzlich können die aktiven Läufer des ersten Schlittens und die aktiven Läufer des zweiten Schlittens für unterschiedliche Förderkräfte ausgelegt sein. Dadurch können die entsprechenden Linearmotoren für unterschiedlich schwere Funktionseinheiten und/oder für unterschiedlich dynamische Bewegungsmuster optimiert werden.

Weiterhin können alternativ oder zusätzlich die aktiven Läufer des ersten Schlittens und die aktiven Läufer des zweiten Schlittens für unterschiedliche Positioniergenauigkeiten ausgelegt sein. Damit kann beispielsweise unterschiedlichen Genauigkeitsanforderungen für die Positioniergenauigkeit der jeweiligen Funktionseinheiten Rechnung getragen werden.

Die zum Verfahren der Funktionseinheiten entlang der Schlitten vorgesehenen Antriebe können ebenfalls unterschiedlich dimensioniert sein, um unterschiedlichen Gewichten, Bewegungsmustern und/oder Positioniergenauigkeiten Rechnung zu tragen.

Gemäß einer möglichen Weiterbildung eines Positionierungssystems gemäß der Erfindung kann dieses zusätzlich zu dem ersten Schlitten und dem zweiten Schlitten einen oder mehrere weitere Schlitten umfassen. Diese weiteren Schlitten können vorzugsweise ähnlich zu dem ersten und dem zweiten Schlitten ausgeführt sein.

Gemäß eines weiteren Aspekts der Erfindung wird die Aufgabe gelöst durch eine Materialbearbeitungsmaschine, welche mit einem Positionierungssystem gemäß den obigen Ausführungen ausgerüstet ist. Hinsichtlich der hierdurch erreichten Wirkungen und Vorteile wird explizit auf das oben gesagte verwiesen.

In einer möglichen Ausführung einer Materialbearbeitungsmaschine nach der Erfindung kann eine der Funktionseinheiten eine Einheit zum mechanischen Schneiden, Fräsen und/oder Gravieren sein.

In einer weiteren möglichen Ausführung einer Materialbearbeitungsmaschine nach der Erfindung kann eine der Funktionseinheiten eine Fokussiereinheit für einen Laserstrahl, vorzugsweise zum Schweißen, Schneiden und/oder Gravieren, umfassen.

Gemäß einer bevorzugten Ausführung einer Materialbearbeitungsmaschine gemäß der Erfindung kann eine der Funktionseinheiten eine Aufnahme umfassen, in welche wechselweise entweder eine Einheit zum mechanischen Schneiden, Fräsen und/oder Gravieren oder eine Fokussiereinheit für einen Laserstrahl, vorzugsweise zum Schweißen, Schneiden und/oder Gravieren, eingesetzt werden kann. Es ist dadurch möglich, die Bearbeitungsmaschine je nach Bedarf mit unterschiedlichen Bearbeitungswerkzeugen auszurüsten.

Weiterhin kann eine der Funktionseinheiten eine Einheit zum Markieren, Beschriften, Bedrucken und/oder Etikettieren umfassen.

Weitere mögliche Funktionseinheiten sind beispielsweise ein ein- oder mehrachsiger Knickarm-Roboter, ein optischer oder nicht-optischer Inspektionskopf, oder ein Sauggreifer.

Die Erfindung wird nachfolgend anhand einiger beispielhafter Darstellungen näher erläutert. Dabei dienen die Zeichnungen und die darin dargestellten Ausführungsbeispiele lediglich dem besseren Verständnis der Erfindung.

Es zeigen:
Fig. 1: ein Positionierungssystem in einer Draufsicht,
Fig. 2: eine vereinfachte Darstellung einer Linearmotoranordnung,
Fig. 3: eine Materialbearbeitungsmaschine,
Fig. 4: eine weitere Materialbearbeitungsmaschine.

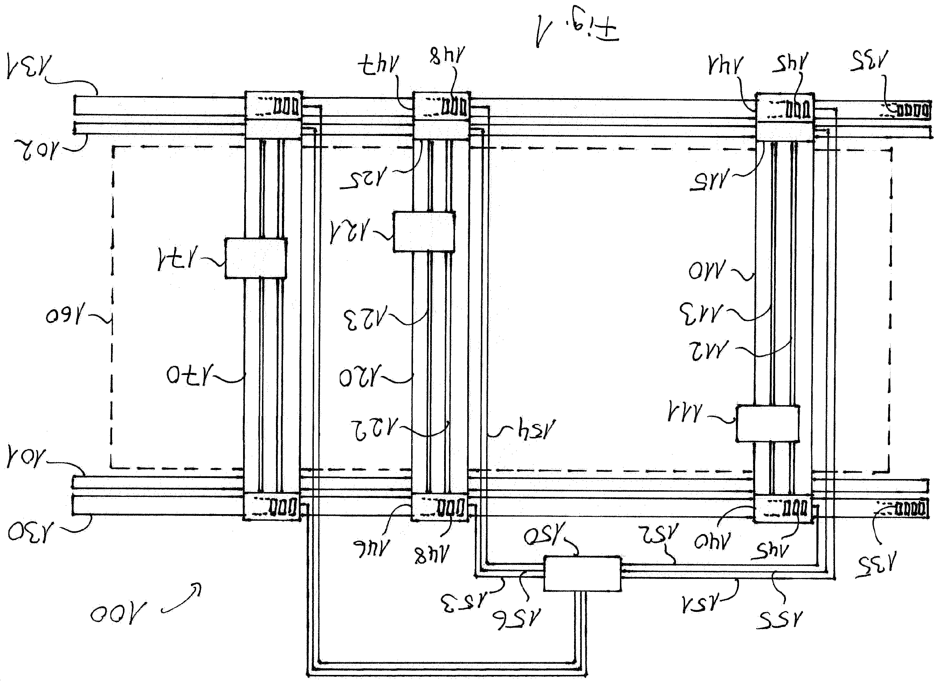

In Figur 1 ist ein Positionierungssystem 100 in einer Draufsicht dargestellt. Das Positionierungssystem 100 umfasst parallele Führungsschienen 101,102, die in einem Abstand zueinander angeordnet sind.

Auf den Führungsschienen 101,102 ist ein erster Schlitten 110 gelagert, so dass er in Längsrichtung der Führungsschienen 101,102 verfahrbar ist. Dabei kann die Lagerung des Schlittens 110 auf den Führungsschienen 101,102 beispielsweise über Gleitlager, Wälzlager, und/oder berührungslose Luft- oder Magnetlager ausgeführt sein.

Auf dem Schlitten 110 ist wiederum eine erste Funktionseinheit 111 so gelagert, dass die Funktionseinheit 111 quer zur Längsrichtung der Führungsschienen 101,102 entlang des Schlittens 110 verfahrbar ist. Dazu sind auf dem Schlitten 110 zwei parallele Führungsstangen 112,113 angeordnet, aufweichen die Funktionseinheit 111 verfahrbar gelagert ist. Zum Antrieb der Funktionseinheit 111 entlang des Schlittens 110 ist eine oder beide der Führungsstangen 112,113 als Spindelstange ausgeführt und wirkt mit nicht dargestellten Spindelmuttern in der Funktionseinheit 111 als Spindeltrieb zusammen. An einem Ende des Schlittens 110 ist eine Antriebs- und Steuereinheit 115 für die Bewegung der Funktionseinheit 111 entlang des Schlittens 110 angeordnet.

Andere Antriebe der Funktionseinheit 111 sind ebenfalls denkbar, wie Riementriebe oder elektromagnetische Linearantriebe.

Ein zweiter Schlitten 120 ist ebenfalls auf den Führungsschienen 101,102 gelagert, wobei Details der Lagerung der Lagerung des Schlittens 110 entsprechen. Auf dem Schlitten 120 ist ebenfalls eine Funktionseinheit 121 verfahrbar angeordnet. Dazu sind wiederum Führungsstangen 122,123 und eine Antriebs- und Steuereinheit 125 vorgesehen.

Der Antrieb der Schlitten 110,120 entlang der Führungsschienen 101,102 erfolgt über einen elektromagnetischen Linearantrieb. Dazu sind neben den Führungsschienen 101,102 passive Statoren 130,131 angeordnet. Die passiven Statoren 130,131 umfassen jeweils eine lineare Anordnung von Magneten 135 mit alternierender Ausrichtung der Pole, von denen aus Gründen der Übersichtlichkeit nur einige dargestellt sind.

Im vorliegenden Beispiel sind die Magnete 135 Permanentmagnete, hier können beispielsweise Magnete aus Samarium-Kobalt oder Neodym-Eisen-Bor verwendet werden. Alternativ können die Magnete 135 der passiven Statoren 130,131 mit Gleichstrom erregte Elektromagnete sein.

Der Schlitten 110 ist im Bereich der passiven Statoren 130,131 mit zwei aktiven Läufern 140,141 ausgerüstet. Die aktiven Läufer 140,141 umfassen jeweils eine Anordnung von Elektromagneten 145, von denen ebenfalls nur einige dargestellt sind.

Der Schlitten 120 ist im Bereich der passiven Statoren 130,131 ebenfalls mit zwei aktiven Läufern 146,147 ausgerüstet. Die aktiven Läufer 146,147 umfassen jeweils eine Anordnung von Elektromagneten 148.

Die Elektromagneten 145,148 werden von einer Steuerung 150 über flexible Leitungen 151,152,153,154 so angesteuert, dass die aktiven Läufer 140,141,146,147 mit den passiven Statoren 130,131 als Linearmotoren zusammenwirken und die Schlitten 110,120 entlang der Führungsschienen 101,102 unabhängig voneinander an gewünschte Positionen bewegen können.

Parallel dazu werden die Antriebs- und Steuereinheiten 115,125 der Schlitten 110,120 über flexible Leitungen 155,156 so angesteuert, dass die Funktionseinheiten 111,121 entlang der Schlitten 110,120 an gewünschte Positionen bewegt werden können.

Durch die entsprechende Anordnung können die Funktionseinheiten 111,121 unabhängig voneinander in einem Arbeitsbereich 160 der Positionierungseinheit 100 positioniert werden.

In vielen Anwendungsfällen der Positionierungseinheit 100 unterscheiden sich die Funktionseinheiten 111,121 in verschiedenen Eigenschaften, beispielsweise in der Masse, der erforderlichen Bewegungsdynamik, und/oder der Positioniergenauigkeit. Um dem Rechnung zu tragen, unterscheiden sich die aktiven Läufer 140,141 in ihrer mechanischen und/oder elektrischen Dimensionierung.

Ist beispielsweise die Funktionseinheit 121 schwerer als die Funktionseinheit 111, oder muss erstere schneller bewegt werden, so können die Elektromagneten 148 der aktiven Läufer 146,147 bei ansonsten gleicher Anordnung für höhere Stromstärken und somit höhere Magnetfeldstärken ausgelegt sein als die Elektromagneten 145 der aktiven Läufer 140,141. Der aus den passiven Statoren 130,131 und den aktiven Läufern 146,147 gebildete Linearmotor kann dann höhere Motorkräfte erzeugen als der aus den passiven Statoren 130,131 und den aktiven Läufern 140,141 gebildete Linearmotor.

Das gleiche Resultat kann erreicht werden, wenn die Elektromagneten 148 eine höhere Wicklungszahl aufweisen als die Elektromagneten 145, oder wenn in den aktiven Läufern 146,147 mehr Elektromagneten 148 angeordnet sind als in den aktiven Läufern 140,141. Das dargestellte Positionierungssystem 100 kann optional einen weiteren Schlitten 170 mit einer zusätzlichen Funktionseinheit 171 aufweisen. Aufbau und Antrieb des weiteren Schlittens 170 und der zusätzlichen Funktionseinheit können auf die gleiche Weise wie die der Schlitten 110, 120 und der Funktionseinheiten 111,121 erfolgen.

Über die dargestellten Schlitten 110,120,170 und Funktionseinheiten 111,121,171 hinaus kann das Positionierungssystem 100 weitere Schlitten und/oder Funktionseinheiten aufweisen.

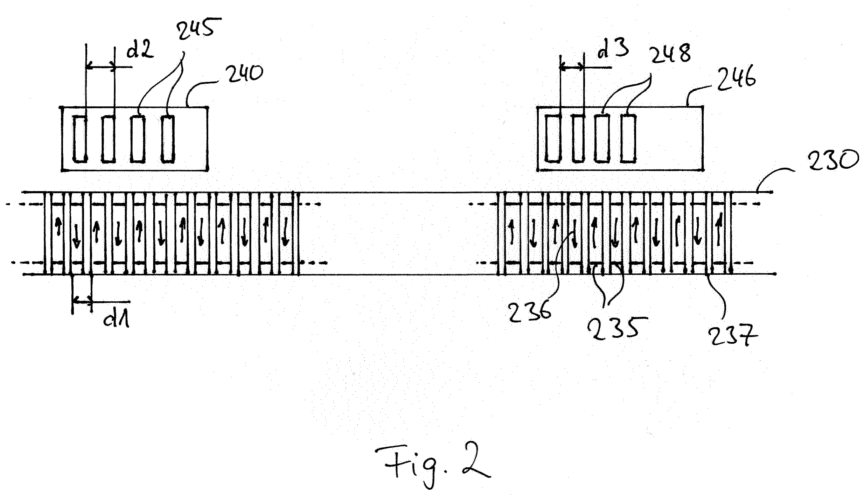

In Figur 2 ist eine alternative Linearmotoranordnung eines Positioniersystems dargestellt. Hierbei ist nur ein passiver Stator 230 dargestellt, über dessen Länge eine große Zahl von Magneten 235 in einem gleichmäßigen Abstand d1 angeordnet ist. Die Pole benachbarter Magnete 235 sind jeweils in entgegengesetzte Richtungen ausgerichtet, dies ist durch entsprechende Pfeile 236 angedeutet.

Um einen magnetischen Kurzschluss zu verhindern sind zwischen den Magneten 235 jeweils nichtmagnetische Trennelemente 237 angeordnet.

Weiterhin ist in der Figur 2 ein aktiver Läufer 240 eines nicht dargestellten ersten Schlittens dargestellt. In dem aktiven Läufer 240 sind im vorliegenden Beispiel vier Elektromagnete 245 mit einem Abstand d2 angeordnet. Der Abstand d2 der Elektromagnete 245 entspricht dem 1,5-fachen des Abstands d1 der Magnete 235. Der aktive Läufer 240 kann durch entsprechende Ansteuerung der Elektromagnete 245 entlang des passiven Stators 230 bewegt werden, wobei die kleinste Schrittweite der Bewegung dem halben Abstand d1 der Magnete 235 entspricht.

Weiterhin zeigt die Figur 2 einen aktiven Läufer 246 eines nicht dargestellten zweiten Schlittens. In dem aktiven Läufer 246 sind ebenfalls vier Elektromagnete 248 angeordnet, wobei ein Abstand d3 der Elektromagnete 248 etwa das 1,2-fache des Abstandes d1 der Magnete 235 beträgt. Durch geeignete Ansteuerung der Elektromagnete 248 kann der aktive Läufer 246 ebenfalls entlang des passiven Stators 230 bewegt werden, wobei die kleinste Schrittweite dem 0,2-fachen des Abstandes der Magnete 235 entspricht und somit deutlich kleiner ist als die kleinste Schrittweite des aktiven Läufers 240.

In einem mit der in Figur 2 dargestellten Linearmotoranordnung ausgerüsteten Positioniersystem kann der zweite Schlitten aufgrund der geringeren Schrittweite des aus dem aktiven Läufer 246 und dem passiven Stator 230 gebildeten Linearmotors genauer positioniert werden als der erste Schlitten.

Bei einer praktischen Umsetzung eines entsprechenden Positioniersystems wären analog zu dem in Figur 1 dargestellten Positioniersystem zwei passive Statoren und für jeden Schlitten zwei aktive Läufer vorgesehen.

Die oben beschriebenen Ausführungen eines Positioniersystems können frei miteinander kombiniert werden. So kann beispielsweise für einen Schlitten gleichzeitig eine höhere Motorkraft und eine geringere Positioniergenauigkeit vorgesehen werden, als für den anderen Schlitten. Gleichermaßen kann auch für einen Schlitten eine höhere Motorkraft und eine höhere Positioniergenauigkeit ausgewählt werden.

Alternativ zu der in Figur 1 dargestellten Anordnung, bei welcher die passiven Statoren 130,131 separat von den Führungsschienen 101,102 ausgeführt sind, können die passiven Statoren in einer nicht dargestellten Variante der Erfindung auch in die Führungsschienen integriert sein. Hierdurch lässt sich ein noch kompakterer Aufbau des Positionierungssystems erreichen.

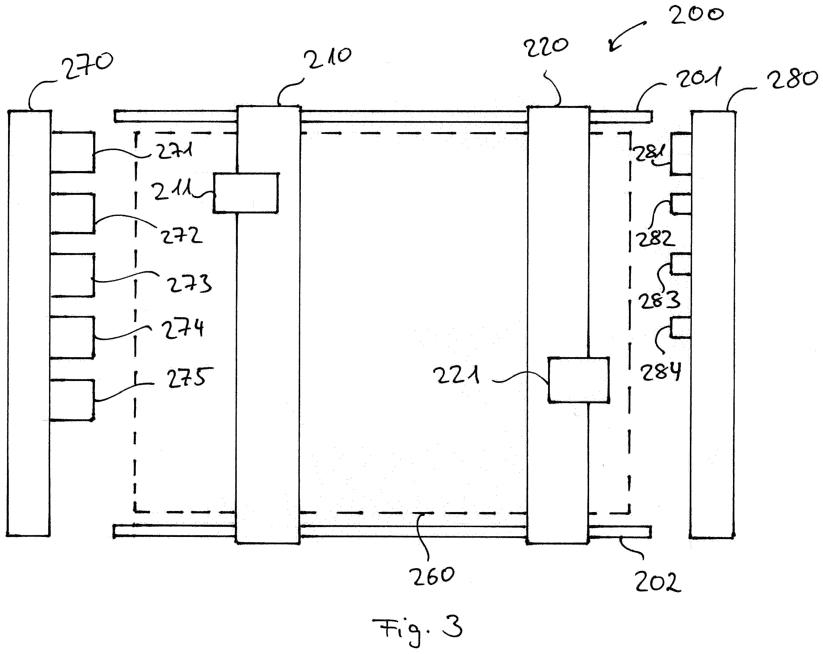

In Figur 3 ist eine Materialbearbeitungsmaschine 200 in einer Draufsicht dargestellt. Die Materialbearbeitungsmaschine 200 umfasst wiederum zwei parallele Führungsschienen 201,202 und zwei Schlitten 210,220, welche entlang der Führungsschienen 201,202 verfahrbar sind. Auf den Schlitten 210,220 sind Funktionseinheiten 211,221 verfahrbar gelagert.

Die Funktionseinheiten 211,221 können durch Verschiebung der Schlitten 210,220 entlang der Führungsschienen 201,202 und durch Verschiebung der Funktionseinheiten 211,221 entlang der Schlitten 210,220 innerhalb eines Arbeitsbereichs 260 der Materialbearbeitungsmaschine 200 positioniert werden.

Lagerung und Antrieb der Schlitten 210,220 und der Funktionseinheiten 211,221 entsprechen den Ausführungen zu den Figuren 1 und 2, Auf eine erneute detaillierte Beschreibung wird daher verzichtet.

Außerhalb des Arbeitsbereichs 260 der Bearbeitungsmaschine 200 sind Werkzeugmagazine 270,280 angeordnet.

Das erste Werkzeugmagazin 270 hält Werkzeuge 271,272,273,274,275 bereit, welche durch die Funktionseinheit 211 aufgenommen und zur Bearbeitung eines Werkstücks verwendet werden können. Bei den Werkzeugen 271,272,273,274,275 kann es sich beispielsweise um Fokussiereinheiten für einen Laserstrahl mit unterschiedlichen Fokuslängen, und/oder um unterschiedliche mechanische Schneid-, Bohr- oder Fräswerkzeuge handeln. Eine Strahlquelle zum Erzeugen eines Laserstrahls sowie notwendige Strahlumlenkungen sind aus Gründen der Übersichtlichkeit nicht dargestellt.

Das zweite Werkzeugmagazin 280 hält Werkzeuge 281,282,283,284 bereit, welche durch die zweite Funktionseinheit 221 aufgenommen und zur Bearbeitung eines Werkstücks verwendet werden können. Bei den Werkzeugen 281,282,283,284 kann es sich beispielsweise um einen Etikettierer, einen Tintenstrahldrucker, einen Markierungsstift und/oder eine Reißnadel handeln.

Falls bei einer Materialbearbeitungsmaschine ein häufiger Wechsel der auf den Funktionseinheiten montierten Werkzeuge nicht erforderlich ist, kann auf die Werkzeugmagazine auch ganz oder teilweise verzichtet werden. In diesem Fall kann eine oder beide Funktionseinheiten fest mit einem bestimmten Werkzeug verbunden werden, wodurch sich der Herstellungs- und Steuerungsaufwand der Materialbearbeitungsmaschine reduziert.

Um unterschiedlichen Massen, Bewegungsmustern und/oder geforderten Positioniergenauigkeiten der Werkzeuge 271,272,273,274,275,281,282,283,284 Rechnung zu tragen, können die Antriebseinheiten der Schlitten 210,220 entsprechen der Ausführungen zu den Figuren 1 und 2 unterschiedlich dimensioniert sein.

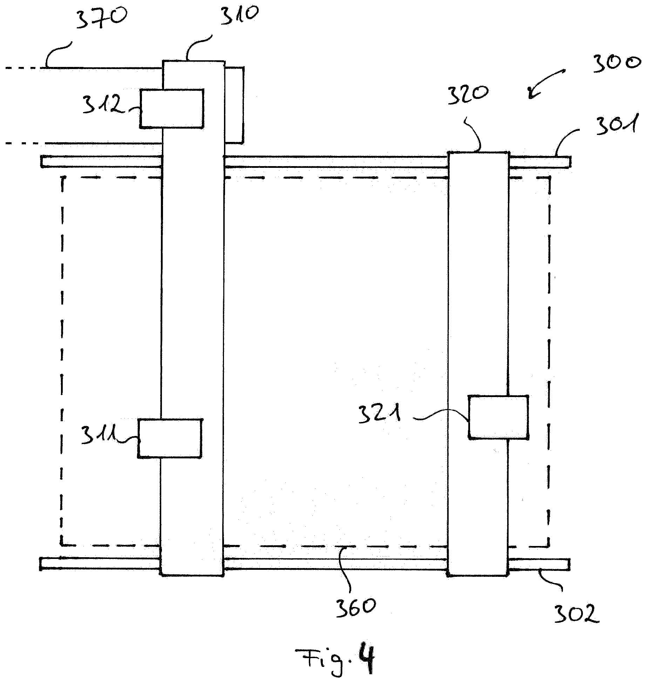

In Figur 4 ist eine weitere Materialbearbeitungsmaschine 300 dargestellt. Diese entspricht in vielen Punkten der Materialbearbeitungsmaschine 200 der Figur 2, sich entsprechende Komponenten sind dabei mit einem um 100 erhöhten Bezugszeichen versehen und werden nicht erneut im Detail beschrieben.

Die Materialbearbeitungsmaschine 300 unterscheidet sich von der Materialbearbeitungsmaschine 20 dadurch, dass der Schlitten 310 deutlich länger ist, als die Breite des Arbeitsbereichs 360. Zusätzlich sind an dem Schlitten 310 zwei Funktionseinheiten 311,312 angeordnet, die unabhängig voneinander entlang des Schlittens 310 verfahren werden können. Wenigstens die Funktionseinheit 312 ist kann dabei über die Grenze des Arbeitsbereichs 360 hinaus verfahren werden.

Die Funktionseinheit 312 kann nun beispielsweise mit einem Greifelement ausgerüstet sein, um zu bearbeitende und/oder fertiggestellte Werkstücke von einem Förderer 370 in den Arbeitsbereich 360 oder von dem Arbeitsbereich 360 auf den Förderer 370 zu transportieren.

Der verlängerte Schlitten 310 kann natürlich auch nur mit einer einzelnen Funktionseinheit versehen sein. Anstelle des Förderers 370 kann neben dem Arbeitsbereich 360 auch ein einfacher Bereitstellungstisch vorgesehen sein. Ebenso kann neben dem Arbeitsbereich 360 eine nicht dargestellte Werkzeugwechseleinrichtung angeordnet sein.

In den Ausführungsbeispielen der Figuren 1, 3 und 4 sind die Arbeitsbereiche der jeweiligen Funktionseinheiten deckungsgleich dargestellt, so dass die Funktionseinheiten ein in dem Arbeitsbereich angeordnetes Werkstück zeitgleich bearbeiten können.

Alternativ können die Arbeitsbereiche der einzelnen Funktionseinheiten entlang des Förderwegs eines Werkstückförderers hintereinander angeordnet sein, wobei sich angrenzende Arbeitsbereiche teilweise überlappen können. Ein getaktet oder kontinuierlich entlang des Förderwegs gefördertes Werkstück kann dann nacheinander von den einzelnen Funktionseinheiten bearbeitet werden.

Dabei können die Führungsschienen und/oder die passiven Läufer der Linearmotoren durch Aneinanderreihung einzelner Bauelemente praktisch in beliebiger Länge ausgeführt werden, ohne dass die Länge der Bauelemente speziell auf die Lage der Bearbeitungsbereiche abgestimmt sein muss.

## Patentansprüche

1. Positionierungssystem zum Positionieren von wenigstens zwei Funktionseinheiten (111,121,171,211,221,311,312,321) entlang zweier Achsen, aufweisend:
- ein Führungsschienensystem mit einer ersten Führungsschiene (101,201,301) und mit einer parallel zur ersten Führungsschiene (101,201,301) und in einem Abstand zu dieser angeordneten zweiten Führungsschiene (102,202,302),
- einen ersten Schlitten (110,210,310), welcher in Längsrichtung der Führungsschienen (101,102,201,202,301,302) verfahrbar auf der ersten Führungsschiene (101,201,301) und auf der zweiten Führungsschiene (102,202,302) gelagert ist, und
- einen zweiten Schlitten (120,220,320), welcher in Längsrichtung der Führungsschienen (101,102,201,202,301,302) verfahrbar auf der ersten Führungsschiene (101,201,301) und auf der zweiten Führungsschiene (102,202,302) gelagert ist,
wobei eine erste Funktionseinheit (111,211,311) an dem ersten Schlitten (110,210,310) quer zur Längsrichtung der Führungsschienen (101,102,201,202,301,302) verfahrbar angeordnet ist, und
wobei eine zweite Funktionseinheit (121,221,321) an dem zweiten Schlitten (120,220,320) quer zur Längsrichtung der Führungsschienen (101,102,201,202,301,302) verfahrbar angeordnet ist,
**dadurch gekennzeichnet, dass**
- der ersten Führungsschiene (101) ein erster passiver Stator (130) zugeordnet ist,
- der zweiten Führungsschiene (102) ein zweiter passiver Stator (131) zugeordnet ist,
- der erste Schlitten (110,210,310) einen ersten aktiven Läufer (140), welcher mit dem ersten passiven Stator (130) als Linearmotor zusammenwirkt, und einen zweiten aktiven Läufer (141), welcher mit dem zweiten passiven Stator (131) als Linearmotor zusammenwirkt, aufweist,
- und dass der zweite Schlitten (120,220,320) einen dritten aktiven Läufer (146), welcher mit dem ersten passiven Stator (130) als Linearmotor zusammenwirkt, und einen vierten aktiven Läufer (147), welcher mit dem zweiten passiven Stator (131) als Linearmotor zusammenwirkt, aufweist.

2. Positionierungssystem nach Anspruch 1, **dadurch gekennzeichnet, dass** sich die aktiven Läufer (140,141) des ersten Schlittens (110) und die aktiven Läufer (146,147) des zweiten Schlittens (120) in ihrer elektrischen und/oder mechanischen Dimensionierung voneinander unterscheiden.

3. Positionierungssystem nach Anspruch 2, **dadurch gekennzeichnet, dass** die aktiven Läufer (140,141) des ersten Schlittens (110) und die aktiven Läufer (146,147) des zweiten Schlittens (120) sich in einer Anzahl und/oder in einem Abstand magnetischer Pole unterscheiden.

4. Positionierungssystem nach Anspruch 2 oder 3, **dadurch gekennzeichnet, dass** die aktiven Läufer (140,141) des ersten Schlittens (110) und die aktiven Läufer (146,147) des zweiten Schlittens (120) sich in einer Wicklungszahl und/oder einem Leitungsquerschnitt von Magnetspulen unterscheiden.

5. Positionierungssystem nach einem der Ansprüche 2 bis 4, **dadurch gekennzeichnet, dass** die aktiven Läufer (140,141) des ersten Schlittens (110) und die aktiven Läufer (146,147) des zweiten Schlittens (120) für unterschiedliche Förderkräfte ausgelegt sind.

6. Positionierungssystem nach einem der Ansprüche 2 bis 5, **dadurch gekennzeichnet, dass** die aktiven Läufer (140,141) des ersten Schlittens (110) und die aktiven Läufer (146,147) des zweiten Schlittens (120) für unterschiedliche Positioniergenauigkeiten ausgelegt sind.

7. Positionierungssystem nach einem der Ansprüche 1 bis 6, **dadurch gekennzeichnet, dass** das Positioniersystem einen oder mehrere weitere Schlitten (170) umfasst.

8. Materialbearbeitungsmaschine mit einem Positionierungssystem nach einem der Ansprüche 1 bis 7.

9. Materialbearbeitungsmaschine nach Anspruch 8, **dadurch gekennzeichnet, dass** eine der Funktionseinheiten (211,221,311,312,321) eine Einheit zum mechanischen Schneiden, Fräsen und/oder Gravieren ist.

10. Materialbearbeitungsmaschine nach Anspruch 8 oder 9, **dadurch gekennzeichnet, dass** eine der Funktionseinheiten (211,221,311,312,321) eine Fokussiereinheit für einen Laserstrahl, vorzugsweise zum Schneiden und/oder Gravieren, umfasst.

11. Materialbearbeitungsmaschine nach einem der Ansprüche 8 bis 10, **dadurch gekennzeichnet, dass** eine der Funktionseinheiten (211,212,311,312,321) eine Aufnahme umfasst, in welche wechselweise entweder eine Einheit zum mechanischen Schneiden, Fräsen und/oder Gravieren oder eine Fokussiereinheit für einen Laserstrahl, vorzugsweise zum Schweißen, Schneiden und/oder Gravieren eingesetzt werden kann.

12. Materialbearbeitungsmaschine nach einem der Ansprüche 8 bis 11, **dadurch gekennzeichnet, dass** eine der Funktionseinheiten (211,221,311,312,321) eine Einheit zum Markieren, Beschriften, Bedrucken und/oder Etikettieren umfasst.
